# EUROPÄISCHE PATENTSCHRIFT

(11) **EP 3 074 167 B1**
(45) Veröffentlichungstag und Bekanntmachung des Hinweises auf die Patenterteilung: **24.02.2021**
(21) Anmeldenummer: 14803105.7
(22) Anmeldetag: 25.11.2014
(51) Int. Cl.: B23D 65/00

(54) **VERFAHREN ZUR HERSTELLUNG EINES VORMATERIALS FÜR EIN ZERSPANUNGSWERKZEUG**
METHODS FOR PRODUCING A PRECURSOR MATERIAL FOR A CUTTING TOOL
PROCÉDÉS DE FABRICATION D'UNE MATIÈRE BRUTE POUR UN OUTIL D'ENLÈVEMENT DE COPEAUX

(30) Priorität: 25.11.2013 EP 13194243
(43) Veröffentlichungstag der Anmeldung: 05.10.2016
(73) Patentinhaber: Voestalpine Precision Strip GmbH, 3333 Böhlerwerk (AT)
(72) Erfinder: AHORNER, Leander, A-3340 Waidhofen/Ybbs (AT); MAYRHOFER, Gerhard, A-3314 Strengberg (AT); NESWADBA, Markus, A-3331 Kematen/Ybbs (AT)
(74) Vertreter: Reitstötter Kinzebach
(86) Internationale Anmeldenummer: PCT/EP2014/075565
(87) Internationale Veröffentlichungsnummer: WO 2015/075267

(56) Entgegenhaltungen:
- WO-A1-2006/000256
- AT-B- 154 337
- US-A- 2 683 923
- US-A- 2 686 439
- US-A- 3 835 734
- US-A- 4 644 127
- US-A1- 2004 016 132

## Beschreibung

Die vorliegende Erfindung betrifft ein Verfahren zur Herstellung eines Vormaterials für ein Zerspanungswerkzeug, gemäß Anspruch 1 und Anspruch 13, ein ähnliches Verfahren ist offenbart in US 2004/016132 A1.

Zerspanungswerkzeuge, wie beispielsweise Bandsägen zur Metallbearbeitung, müssen eine ganze Reihe von Anforderungen erfüllen, um ökonomisch verwendbar zu sein: Das Bandmaterial muss flexibel und elastisch sein, es muss nicht nur die Zugspannungen aufnehmen und ertragen können, denen das Sägeband schon von seiner Montage her ausgesetzt ist, sondern es muss darüber hinaus auch die das Band auf die Biegung beanspruchenden Kräfte während des Sägevorgangs und die entsprechenden Torsionsmomente und -spannungen ertragen können, die das Band bei der Drehung um seine Längsachse oberhalb und unterhalb des Schneidtisches bzw. vor und nach der Schneidstelle erfährt. Hinzu kommen dynamische Belastungen, die durch den Eingriff der einzelnen Zähne in das zu bearbeitende Material entstehen, und nicht zuletzt thermische Belastungen durch Temperaturen, die im Zahnbereich und insbesondere an den Zahnspitzen 600 °C und mehr erreichen können. Da die Kühlung des Bandes eine Abfuhr dieser Wärme bewirkt, kommt es nicht nur zu dieser thermischen Belastung, sondern auch zur Ausbildung eines Temperaturgradienten und den damit zusammenhängenden thermischen Spannungen, die sich den mechanischen und insbesondere den dynamischen Spannungen überlagern.

Da sich die Anforderungen hinsichtlich Zähigkeit und Biegefestigkeit des Sägebandes einerseits und Warmhärte und Verschleißfestigkeit der Sägezähne andererseits durch ein einzelnes Material, beispielsweise ein Metall oder eine Metalllegierung, nur unzureichend realisieren lassen, werden als Ausgangskomponente bzw. Vormaterial für Hochleistungszerspanungswerkzeuge bevorzugt so genannte Bimetallbänder oder Bimetallblätter eingesetzt. Derartige Bimetallbänder bzw. -blätter bestehen üblicherweise aus einem flächigen Träger aus einem Trägermaterial, welches die nötige Zähigkeit und Biegefestigkeit für das spätere Zerspanungswerkzeug aufweist, beispielsweise aus niedriglegierten Stählen oder auch aus Kohlenstoffstahl. Auf eine schmale Kante des flächigen Trägers wird üblicherweise ein Draht aus einem Schneidenmaterial geschweißt, welches eine höhere Verschleißfestigkeit und eine höhere Wärmehärte aufweist. Typischerweise wird als Schneidenmaterial ein Kantendraht aus Schnellarbeitsstahl (HSS) verwendet.

Aus diesem Vormaterial stellt der Sägehersteller dann das Sägeblatt oder Sägeband her. Dazu wird an der Kante des flächigen Trägers, an der sich der verschweißte Schnellarbeitsstahldraht befindet, das Zahnprofil des späteren Sägeblattes oder - bandes herausgearbeitet, beispielsweise herausgefräst oder herausgeschliffen. Auf diese Weise entstehen Zähne mit einem spitzen Bereich aus Schnellarbeitsstahl, wobei der Rest des Sägeblattes oder -bandes aus dem zähfesten elastischen Stahl des flächigen Trägers besteht. Je nach Anforderungsprofil der Säge können die Zähne vollständig aus Schneidenmaterial bestehen, bevorzugt bestehen jedoch nur die Zahnspitzen aus Schneidenmaterial, während der Zahnfuß in den flächigen Träger hinabreicht und somit aus dem zähfesten elastischen Trägermaterial besteht.

Ein solches, in herkömmlicher Weise hergestelltes Bimetallband oder -blatt weist jedoch den Nachteil auf, dass das Herausarbeiten des Zahnprofils mit einem hohen Verlust an Schneidenmaterial verbunden ist, da das Material aus den Zahnzwischenräumen keine weitere Verwendung findet. Zur Lösung dieses Problems ist beispielsweise in der internationalen Patentanmeldung WO 2006/000256 A1 der vorliegenden Anmelderin vorgeschlagen worden, ein Vormaterial zur Herstellung von Sägeblättern oder Sägebändern zu verwenden, das aus zwei flächigen Trägern besteht, die mittels eines Kantendrahts aus einem Schnellarbeitsstahl miteinander verbunden sind. Dieser Verbund lässt sich durch geeignete Wahl einer Trennlinie so auftrennen, dass zwei Bimetallbänder entstehen, deren Kantenprofil näherungsweise bereits dem Zahnprofil des späteren Sägeblattes oder -bandes entspricht. Nach der Auftrennung wird jedes Bimetallband nachbearbeitet, bis die endgültig gewünschte Form der Zähne erreicht ist. Auf diese Weise ist der Materialverlust an Schneidenmaterial geringer.

Die bisher beschriebenen Verfahren sind jedoch weiterhin mit dem Nachteil behaftet, dass das eingesetzte Schneidenmaterial einerseits in Form von Kantendrähten herstellbar sein und andererseits mit dem flächigen Träger verschweißbar sein muss. Diese Voraussetzungen schränken die Auswahl an Materialien sowohl für den flächigen Träger als auch für die Schneiden erheblich ein.

In dem US-Patent US 7,373,857 B2 wird ein Verfahren zur Herstellung eines Zerspanungswerkzeuges beschrieben, wo ebenfalls ein flächiges Verbundmaterial aus unterschiedlichen Metalllegierungen eingesetzt wird. Dabei wird ein Draht aus Schneidenmaterial in eine in einem flächigen Träger ausgesparte Rille eingelegt und durch Druck und Wärmebehandlung einplattiert. Dieses Verfahren hat zwar Kostenvorteile, da an Stelle von Kantendraht beispielsweise auch Runddraht verwendet werden kann, jedoch ist auch hier die Materialauswahl eingeschränkt, da das Schneidenmaterial einerseits als Draht vorliegen muss und andererseits nicht jede Kombination von Schneidenmaterial und Material des flächigen Trägers eine ausreichend stabile Verbindung der beiden Materialien ermöglicht. Ein ähnliches Verfahren wird auch in der US-Patenanmeldung US 2004/016132 A1 beschrieben, wobei ein Draht in eine Vertiefung eines Trägerbandes einplattiert wird, der später das Kantenelement eines Bimetallbandes bildet. Es wird erwähnt, dass der Draht welcher später das Kantenelement bildet, aus einem Schnellarbeitsstahl, einschließlich pulvermetallurgisch hergestellten Metallen, hergestellt sein kann.

In US 2,686,439 A wird ein Verfahren zur Herstellung eines Schneidwerkzeugs beschrieben, bei dem ein pulverförmiges Schneidenmaterial (Hartmetall) in Vertiefungen eines Trägermaterials eingebracht wird. Die gesamte Anordnung wird mit einem weiteren Metall plattiert und anschließend in die gewünschte Form gebracht. Dann wird die Anordnung über die Sintertemperatur des Hartmetalls erhitzt und die schützende Metallhülle gegebenenfalls entfernt.

In US 3,835,734 A wird ein Verfahren beschrieben, bei dem ein pulverförmiger Werkzeugstahl in vorkompaktierter Form in einen Behälter aus niedriglegiertem Stahl eingesetzt wird und durch heiß-isostatisches Pessen und anschließendes Walmwalzen bzw. Warmplattieren Bimetallkörper umgeformt wird. Durch maschinelle Bearbeitung wird ein bandförmiges Bauteil mit einer Schneidkante aus Werkzeugstahl erzeugt.

In keinem der Dokumente US 7,373,857 B2, US 2004/016132 A1, US 2,686,439 A und US 3,835,734 A wird jedoch beschrieben, pulverförmiges Schneidenmaterial mit dem Trägermaterial zu verschweißen.

Aus der EP 1 404 484 B1 ist ein Verfahren zur Herstellung eines Zerspanungswerkzeuges bestehend aus einem bandförmigen oder scheibenförmigen Trägermaterial bekannt, auf dessen im Wesentlichen hochkant stehende Kante ein Schneidenbereich in Form einer pulverförmigen Legierung aufgebracht und im Zuge des Aufbringens mittels Laserstrahl geschmolzen wird und auf der Kante erstarrt. Mit diesem Verfahren stehen eine viel größere Zahl an Schneidenmaterialien zur Verfügung, da die Voraussetzung wegfällt, dass das Schneidenmaterial als Kant- bzw. Runddraht herstellbar ist. Nachteilig an der pulvermetallurgischen Herstellung des Schneidbereichs ist jedoch, dass die erreichbare Prozessgeschwindigkeit geringer als beim Verschweißen eines Kantdrahtes ist.

Der vorliegenden Erfindung liegt daher das technische Problem zugrunde, ein Verfahren zur Herstellung eines Vormaterials für ein Zerspanungswerkzeug anzugeben, das kostengünstig und einfach zu realisieren ist und den Einsatz einer großen Vielfalt an Materialien für den flächigen Träger und das Schneidenmaterial ermöglicht.

Gelöst wird das technische Problem durch das Verfahren zur Herstellung eines Vormaterials für ein Zerspanungswerkzeug gemäß vorliegendem Anspruch 1, vorteilhafte Weiterbildungen des Verfahrens sind Gegenstände der abhängigen Ansprüche.

Die Erfindung betrifft demnach ein Verfahren zur Herstellung eines Vormaterials für ein Zerspanungswerkzeug, insbesondere eines Vormaterials für ein Sägeblatt, ein Sägeband, eine Schneidlinie, ein Stanzmesser oder eine Klinge, wobei man wenigstens ein erstes teilchenförmigen Schneidenmaterial auf einen flächigen Träger aufbringt, man das erste teilchenförmige Schneidenmaterial mit dem flächigen Träger verschweißt; und man den flächigen Träger im Wesentlichen entlang der so erzeugten Schweißverbindung trennt. Das teilchenförmige Schneidenmaterial wird dabei auf eine Oberfläche auf der Ober- und/oder der Unterseite des flächigen Trägers aufgebracht. Durch das Verschweißen entsteht im Kontaktbereich zwischen dem flächigen Träger und dem teilchenförmigen Schneidenmaterial eine Legierungszone aus dem Material des flächigen Trägers und dem teilchenförmigen Schneidenmaterial. Das Trennen der beiden flächigen Träger kann im einfachsten Fall entlang einer geraden Mittellinie durch die entstandene Schweißverbindung erfolgen. Die Trennlinie muss jedoch nicht ausschließlich in der Schweißverbindung verlaufen, sondern kann auch eine kompliziertere Form aufweisen und gegebenenfalls auch teilweise in den flächigen Träger reichen, damit das Auftrennen bereits ein Kantenprofil erzeugt, das der gewünschten späteren Form der Zähne angenähert ist.

Das erfindungsgemäße Verfahren weist zahlreiche Vorteile auf. Da das Schneidenmaterial in Teilchenform zugeführt wird, ist man bei der Auswahl des Schneidenmaterials nicht auf Materialien beschränkt, die sich als Draht herstellen lassen. Selbst bei Verwendung von Materialien, die prinzipiell auch als Draht erhältlich sind, besteht bei der Verwendung eines teilchenförmigen, insbesondere eines pulverförmigen Materials ein hoher Kostenvorteil, da die mit der Drahtherstellung verbundenen Kosten wegfallen. Ferner wird die mit der pulvermetallurgischen Herstellung des Schneidbereichs verbundene Limitierung der Prozessgeschwindigkeit dadurch gemildert, dass mit dem erfindungsgemäßen Verfahren nach Trennung der Schweißverbindung zwei Bimetallbänder bzw. -scheiben entstehen, die durch einen einzigen Schweißvorgang hergestellt worden sind. Effektiv wird die Prozessgeschwindigkeit daher gegenüber dem aus EP 1 404 484 B1 bekannten Verfahren verdoppelt. Die effektive Prozessgeschwindigkeit kann noch weiter erhöht werden, indem man einen breiteren flächigen Träger verwendet und eine oder mehrere weitere entsprechende Schweißlinien erzeugt und anschließend den flächigen Träger in mehrere Bimetallbänder trennt.

Man kann das teilchenförmige Trägermaterial direkt auf eine im Wesentlichen ebene Oberfläche des flächigen Trägers aufbringen und mit dem Trägermaterial verschweißen. Dies resultiert aber einerseits in einem recht hohen Schweißüberstand ,der in der Regel nachbearbeitet werden muss, und andererseits bleibt noch ein deutlicher Anteil an Trägermaterial unterhalb der Schweißverbindung, der, je nach verwendetem Trägermaterial, in dem nach Auftrennen des flächigen Trägers entstehenden Schneidenbereich unerwünscht sein kann. Vorzugsweise bringt man daher das wenigstens eine erste teilchenförmige Schneidenmaterial in eine auf der Oberseite und/oder der Unterseite des flächigen Trägers ausgesparte Vertiefung ein. Somit entsteht nach Trennen der beiden Träger entlang der Schweißverbindung ein Kantenbereich, der nahezu nur noch aus Schneidenmaterial besteht, so dass bei der späteren Weiterverarbeitung Zahnspitzen herausgearbeitet werden können, die ebenfalls nur noch aus Schneidenmaterial bestehen. Ferner wird die entstehende Schweißüberhöhung verringert, so dass die weitere Bearbeitung vereinfacht wird. Die Vertiefung kann jede beliebige Querschnittsform, wie rund, oval, eckig, aufweisen.

Der flächige Träger kann jede gewünschte Form besitzen, die geeignet ist, daraus bei der späteren Weiterverarbeitung ein Zerspanungswerkzeug wie ein Sägeblatt, eine Sägeband, eine Schneidlinie, oder ein Stanzmesser oder eine Klinge zu erzeugen. Besonders bevorzugt wird der flächige Träger in dem erfindungsgemäßen Verfahren jedoch in Form eines Bandes aus Metall oder Metalllegierung bereitgestellt, insbesondere eines Endlosbandes, das beispielsweise von einer Spule abgewickelt und einer Schweißeinrichtung zugeführt wird.

Der flächige Träger und das teilchenförmige Schneidenmaterial können auf unterschiedlichste Weise miteinander verschweißt werden, indem man den flächigen Träger und/oder das erste teilchenförmigen Schneidenmaterial zumindest teilweise aufschmilzt und den aufgeschmolzenen Materialverbund wenigsten teilweise erstarren lässt. Typischerweise wird zumindest eines der beteiligten Materialien, beispielsweise das Trägermaterial in dem Bereich, wo das teilchenförmige Schneidenmaterial zugeführt wird, aufgeschmolzen, so dass beim Erstarren ein Materialverbund Trägermaterial und dem zugeführten teilchenförmigen Schneidenmaterial entsteht. Das Schneidenmaterial selbst kann ebenfalls aufschmelzen, es kann sich jedoch auch als teilchenförmiger Schneidstoff in dem Schweißbereich einlagern. Die Matrix, in welcher sich das teilchenförmige Schneidenmaterial einlagert, kann ein Material sein, das zusammen mit dem teilchenförmigen Schneidenmaterial zugeführt wird, und das bei Energieauftrag selbst aufschmilzt. Alternativ kann auch das Material des flächigen Trägers als Matrix für ein nicht aufschmelzendes teilchenförmiges Schneidenmaterial dienen. Bevorzugt wird jedoch ein teilchenförmiges Schneidenmaterial verwendet, das beim Verschweißen mit dem flächigen Träger selbst schmilzt.

Zum Trennen der so hergestellten Schweißverbindung als abschließendem Schritt des erfindungsgemäßen Verfahrens können zahlreiche aus dem Stand der Technik bekannten Trennverfahren, wie Schneiden, Spaltschneiden, Stanzen, Laserschneiden, Wasserstrahlschneiden oder ähnliches verwendet werden.

Der flächige Träger besteht vorzugsweise aus einem Grundkörper aus einem Trägermaterial, beispielsweise einem Metall oder einer Metalllegierung, zum Beispiel einem niedriglegierten Werkzeugstahl. Dann wird mit dem erfindungsgemäßen Verfahren durch Zufuhr des teilchenförmigen Schneidenmaterials ein entsprechender hochfester Schneidenbereich erzeugt, der nach dem Auftrennen des flächigen Trägers dann die Kanten der entstehenden Trennteile bildet.

Der in dem erfindungsgemäßen Verfahren eingesetzte flächige Träger kann zusätzlich zu dem Grundkörper aus dem üblichen Trägermaterial jedoch bereits einen Bereich aufweisen, der aus einem weiteren Schneidenmaterial besteht. Ein solcher flächige Träger kann beispielsweise ein Träger mit einem zentralen Streifen aus Schnellarbeitsstahl sein, wie er in der WO 2006/000256 A1 der Anmelderin beschrieben wurde. Durch das erfindungsgemäße Verfahren wird dem Bereich aus weiterem Schneidenmaterial des flächigen Trägers somit ein zusätzlicher Bereich aus erstem teilchenförmigem Schneidenmaterial zugefügt, so dass ein mehrschichtiges Band entsteht. Bei den ersten und weiteren Schneidenmaterialien handelt es sich vorzugsweise um unterschiedliche Materialien.

Alternativ oder zusätzlich kann man vor dem Trennen des Verbunds aus flächigem Träger und erstem Schneidenmaterial zumindest ein zweites teilchenförmiges Schneidenmaterial zuführen und aufschmelzen, um auf diese Weise ein zwei- oder dreischichtiges Verbundmaterial zu erzeugen. Diesen Prozess kann man selbstverständlich auch in mehreren Stufen mit weiteren teilchenförmigen Schneidenmaterialien fortsetzen, um ein mehrschichtiges Verbundmaterial zu erzeugen.

Das erste und gegebenenfalls das zweite teilchenförmige Schneidenmaterial oder die weiteren teilchenförmigen Schneidenmaterialien werden vorzugsweise in Form eines Pulvers, eines Granulats, einer Paste oder eines Fülldrahtes zugeführt. Im Fall eines Fülldrahts befindet sich das teilchenförmige Schneidenmaterial in Form eines Pulver, eines Granulates oder einer Paste im Inneren eines röhrenförmigen Drahtes. Der Draht selbst kann beispielsweise aus dem Material des Trägers bestehen. Die Zufuhr in Pulverform ist jedoch besonders bevorzugt.

Die Zufuhr des teilchenförmigen Schneidenmaterials kann in unterschiedlichster Weise erfolgen. Liegt das teilchenförmige Schneidenmaterial in Pulver- oder Pastenform vor, kann die Zufuhr mittels einer Düse, beispielsweise einer Ringdüse oder einer Schlitzdüse erfolgen. Liegt das teilchenförmige Schneidenmaterial als Fülldraht vor, kann dieser beispielsweise von einer Vorratsspule zugeführt werden.

Die verwendeten Schneidenmaterialien enthalten vorzugsweise Metalle und/oder Metalllegierungen, beispielsweise Metalle oder Metalllegierungen, die bei dem Schweißprozess selbst aufschmelzen, wie beispielsweise Schnellarbeitsstahl (HSS).

Als teilchenförmige Schneidenmaterialien können beispielsweise alle gängigen HSS-Werkstoffe, welche bereits als Draht für Bi-Metall für Sägeblätter oder Sägebänder eingesetzt werden (beispielhaft dafür sind S 2-10-1-8 (M42, 1.3247) oder S 6-5-2 (M2, 1. 3343)) verwendet werden. Darüberhinaus können im erfindungsgemäßen Verfahren auch alle weiteren HSS-Werkstoffe, welche nicht als Draht verfügbar sind, eingesetzt werden. Hierbei kann sich die Legierungszusammensetzung in Richtung 0,5-2,5% C, 0,1 - 1,0% Si, 0,1 - 0,7% Mn, 3,0 - 6,0% Cr, 2,0 - 11% Mo, bis 6,5%V, bis 15%W, bis 15%Co bewegen. Außerdem können Karbidbildner wie Nb und Ti mit einem prozentualen Gehalt von bis 5% zugegeben werden.

Alternativ oder zusätzlich können die Schneidenmaterialien auch metallische Hartstoffe enthalten. Metallische Hartstoffe sind Boride, Karbide, Silizide und Nitride hochschmelzender Übergangsmetalle, aber auch Oxide in Verbindung mit umformbaren Gefügebestandteilen, d.h. einer Matrix in welcher die metallischen Hartstoffe eingelagert sind. Unter metallische Hartstoffe fallen z.B. TiC, TaC, WC, TiB₂, MoSi₂, Al₂O₃, SiO₂), woraus sich auch Mischkristalle (Z.B. TiC-WC, Mo₂C-TiC), Doppelcarbide bzw. Komplexcarbide (z.B. CO₃W₃C, Ni₃W₃C) und intermetallische Verbindungen ableiten lassen. Ferner kommen auch Mischungen von HSS-Werkstoffen mit metallischen Hartstoffen in Frage. Neue Schneidstoffe durch mechanisches Legieren sind selbstverständlich ebenso denkbar. Es kommen auch die ternären Systeme Fe-Co-Mo bzw. Fe-Co-W und des daraus ableitbaren Vierstoffsystems Fe-Co-Mo-W als Schneidwerkstoff in Frage. Diese Systeme können sehr feine Ausscheidungen im Zuge einer Ausscheidungshärtung bilden, was zu einer enormen Härtesteigerung führt. Im lösungsgeglühten Zustand sind solche Legierungen entsprechend weich und können auch kaltumgeformt werden. Übliche Legierungszusammensetzungen solcher ausscheidungshärtbaren Legierungen sind im Bereich von 23 - 25% Co und einer Kombination W + Mo/2 von 10 - 31%. Den Rest bilden Fe und erschmelzungsbedingte Verunreinigungen.

Als Trägermaterialien können im erfindungsgemäßen Verfahren alle gängigen Rückenmaterialien in Betracht gezogen werden. Es können beispielsweise übliche niedriglegierte Stähle, welche eine hohe Zähigkeit und Dauerfestigkeit besitzen verwendet werden. Geeignete flächige Träger besitzen beispielsweise eine chemischen Zusammensetzung im Bereich von 0,2 -0,6% C, 0,1 - 1,0% Si, 0,3 - 2,0% Mn, 0,5 - 7,0% Cr, 0,1 - 2,6%Mo, bis 0,6% V und bis 5,0% W. Geringe Zusätze von Nb und Ti im Bereich von bis zu 0,5% gesamt können zur Kornfeinerung beigemengt sein. Eisen und erschmelzungsbedingte Verunreinigungen bilden den Rest. Als Trägermaterial kann auch Kohlenstoffstahl mit 0,50 bis 1,50% C, bis 1,5% Si, bis 1,5%Mn Anwendung finden.

Der flächige Träger und das teilchenförmige Schneidenmaterial werden durch Erhitzen des Verbindungsbereichs durch geeignete Energiezufuhr, gegebenenfalls unter Anwendung von Druck, miteinander verschweißt. Die Energiezufuhr erfolgt beispielsweise mittels einer Schweißvorrichtung. Die Energiezufuhr muss ausreichen, um wenigstens eines der beteiligten Materialien aufzuschmelzen. Vorzugsweise werden der flächige Träger und das teilchenförmige Schneidenmaterial durch Energiezufuhr mittels eines oder mehrerer Laser miteinander verschweißt. Die Energiezufuhr kann aber auch auf andere Weise, beispielsweise durch Elektronenstrahlen, erfolgen. Insbesondere bei Zufuhr des teilchenförmigen Schneidenmaterials in Form einer Paste oder eines Fülldrahtes kann auch jede andere herkömmliche Schweißvorrichtung, beispielsweise eine Lichtbogen- oder Schutzgasschweißvorrichtung oder eine Widerstandsschweißvorrichtung, verwendet werden.

Je nach späterem Verwendungszweck kann man das teilchenförmige Schneidenmaterial nur auf einer Seite der Oberfläche des flächigen Trägers zuführen. Vorzugsweise führt man aber das flächige Schneidenmaterial auf beiden Seiten des flächigen Trägers zu, also auf der Ober- und Unterseite des flächigen Trägers. Dies kann gleichzeitig oder nacheinander erfolgen, beispielsweise kann man den flächigen Träger im Bereich der Schweißvorrichtung vertikal anordnen und das teilchenförmige Schneidenmaterial gleichzeitig von beiden Seiten zuführen. Bei einer horizontalen Anordnung des flächigen Trägers im Schweißbereich kann man den flächigen Träger nach Aufbringen des teilchenförmigen Schneidenmaterials auf der Oberseite über eine Umlenkrolle führen, so dass in einem kompakten Bereich der Prozessstrecke die Unterseite des Trägers nach oben gerichtet ist und zum Aufbringen des Schneidenmaterials bereit steht. Insbesondere wenn der flächige Träger als Band vorliegt, ist es beispielsweise auch denkbar, das Band nach Aufbringen des teilchenförmigen Schneidenmaterials auf der Oberseite auf einer gewissen Laufstrecke des Bandes über einen Winkel von 180° zu verdrehen, so dass etwas weiter stromab die ursprüngliche Unterseite des Trägers nach oben gerichtet ist.

Die Erfindung wird im Folgenden unter Bezugnahme auf die beigefügten Zeichnungen näher erläutert.

In den Zeichnungen zeigen:
- Fig. 1: eine schematische Darstellung der Erzeugung einer Schweißverbindung zwischen einem flächigen Träger und zugeführtem teilchenförmigem Schneidenmaterial im erfindungsgemäßen Verfahren;
- Fig. 2: eine Variante der Fig. 1, bei welcher der flächige Träger Vertiefungen zur Aufnahme des teilchenförmigen Schneidenmaterials aufweist;
- Fig. 3: eine Variante der Fig. 1, bei welcher der flächige Träger als Bimetallträger mit einem zentralen Streifen aus einem anderen Material ausgebildet ist;
- Fig. 4: eine Variante der Fig. 1 oder der Fig. 2, bei der zwei teilchenförmige Schneidenmaterialien zugeführt werden;
- Fig. 5: das Vormaterial aus Fig. 1 oder Fig. 2 nach dem Herstellen der Schweißverbindung;
- Fig. 6: das Vormaterial aus Fig. 5 nach Plattwalzen der Schweißverbindung;
- Fig. 7: das Vormaterial aus Fig. 3 nach dem Herstellen der Schweißverbindung;
- Fig. 8: das Vormaterial aus Fig. 7 nach Plattwalzen der Schweißverbindung;
- Fig. 9: das Vormaterial aus Fig. 4 nach dem Herstellen der Schweißverbindung;
- Fig. 10: das Vormaterial aus Fig. 9 nach Plattwalzen der Schweißverbindung;
- Fig. 11: das Vormaterial der Fig. 6 nach Trennen der Schweißverbindung;
- Fig. 12: das Vormaterial der Fig. 8 nach Trennen der Schweißverbindung;
- Fig. 13: das Vormaterial der Fig. 10 nach Trennen der Schweißverbindung;
- Fig. 14: eine schematische Darstellung des Aufbringens eines teilchenförmigen Schneidenmaterials auf die Schneidkannte eines flächigen Trägers;
- Fig. 15: eine Variante des Verfahrens der Fig.14, bei welcher teilchenförmiges Schneidenmaterial aus drei Richtungen aufgebracht wird; und
- Fig. 16: das erfindungsgemäße Vormaterial aus Fig. 15 nach Bearbeitung des Kantenbereichs.

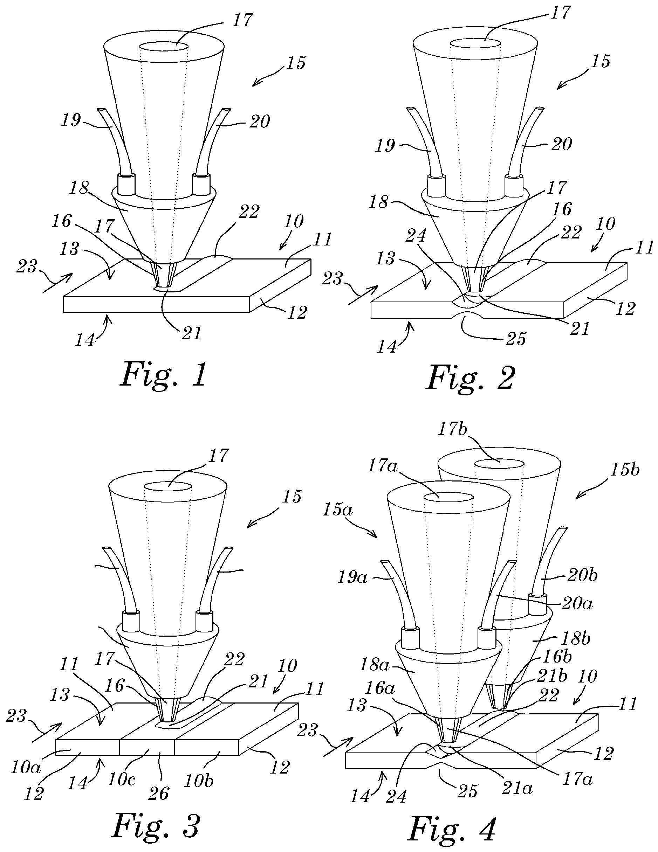

In Figur 1 ist bespielhaft eine erste Ausführungsform des erfindungsgemäßen Verfahrens zur Herstellung eines Vormaterials für ein Zerspanungswerkzeug, beispielsweise eines Vormaterials für ein Sägeblatt, ein Sägeband oder eine Schneidlinie, schematisch dargestellt. Man erkennt einen flächigen Träger 10, der im dargestellten Beispiel lediglich einen einheitlichen Grundkörper 11 aus einem Trägermaterial umfasst. Im dargestellten Beispiel ist der flächige Träger der besseren Übersichtlichkeit halber als kurzer Abschnitt dargestellt. Vorzugsweise handelt es sich aber um ein Endlosband, das beispielsweise von hier ebenfalls nicht dargestellten Spulen abgewickelt wird. Der flächige Träger 10 weist eine Oberseite 13 und eine Unterseite 14 auf, die im dargestellten Beispiel eben sind. Mittels eines Schweißkopfes 15 einer nicht weiter dargestellten Schweißvorrichtung wird ein erstes teilchenförmiges Schneidenmaterial 16 auf die Oberseite 13 des flächigen Trägers 10 aufgebracht und mittels eines Laserstrahls 17 aufgeschmolzen, so dass der Träger 10 und das teilchenförmige Schneidenmaterial 16 miteinander verschweißt werden können. Der Schweißkopf 15 der Schweißvorrichtung weist im dargestellten Beispiel dazu eine Ringdüse 18 auf, der das teilchenförmige Schneidenmaterial 16 mittels Leitungen 19, 20 zugeführt wird. Es kann jedoch auch jede andere Art von Düse verwendet werden. Die dargestellte Ringdüse 18 erzeugt einen kegelförmigen Strahl des teilchenförmigen Schneidenmaterials 16, der auf die Oberseite 13 des Trägers gerichtet ist. Der Laserstrahl 17 wird durch das Zentrum des Schweißkopfes 15 und das Zentrum des kegelförmigen Strahls des Schneidenmaterials 16 geführt und auf einen Bereich 21 fokussiert, in dem das Schneidenmaterial auf die Oberfläche des Trägers 10 trifft. In diesem Bereich findet der Schweißvorgang statt. Je nach verwendeten Materialien wird das teilchenförmige Schneidenmaterial 16 und/oder ein zusammen mit dem Schneidenmaterial zugeführtes Matrixmaterial und/oder das Trägermaterial im Schweißbereich 21 zumindest teilweise aufgeschmolzen, so dass eine Schweißverbindung 22 entsteht.

Der flächige Träger, d.h. im dargestellten Beispiel das Endlosband, wird entlang des Pfeils 23 unter dem stationären Schweißkopf 15 hindurchbewegt.

Figur 2 zeigt eine Variante der Ausführungsform der Figur 1, bei welcher der flächige Träger Vertiefungen 24, 25 zur Aufnahme des teilchenförmigen Schneidenmaterials aufweist. Elemente, die den bereits im Zusammenhang mit Figur 1 beschriebenen Elementen entsprechen, werden mit denselben Bezugsziffern bezeichnet. Bei dieser Variante weist der flächige Träger 10 auf seiner Oberseite 13 eine abgerundete Vertiefung 24 und auf seiner Unterseite eine abgerundete Vertiefung 25 auf. Die Vertiefungen 24, 25 verringern einerseits die Schweißüberhöhung der Schweißverbindung 22 über die Oberfläche des flächigen Trägers 10 hinaus, so dass der Nachbearbeitungsaufwand und insbesondere der Verlust an Schneidenmaterial bei der Nachbearbeitung verringert wird. Andererseits wird die Dicke des Trägermaterials 12 im Schweißbereich 21 verringert, so dass, wie weiter unten genauer erläutert wird, nach Trennen der Schweißverbindung ein Kantenbereich entsteht, der im Wesentlichen aus Schneidenmaterial 16 besteht.

Figur 3 zeigt eine Variante der Ausführungsform der Figur 1, bei welcher der flächige Träger 10 als Bimetallträger ausgebildet ist. Der flächige Träger 10 weist einen Grundkörper 11 aus Trägermaterial 12 auf, der in zwei Seitenstreifen 10a, 10b unterteilt ist. Die beiden Seitenstreifen 10a, 10b sind durch einen zentralen Streifen 10c aus einem widerstandsfähigeren Material, beispielsweise aus Schnellarbeitsstahl 26, miteinander verbunden. Eine solche Variante des Trägers 10 kann beispielsweise mit dem aus der WO 2006/000256 A1 der Anmelderin bekannten Verfahren herstellt werden. Der Träger 10 ist anlog zur Ausführungsform der Figur 1 eben dargestellt. Selbstverständlich kann der Träger 10 im Bereich des zentralen Streifens 10c mit oberen und/oder unteren Vertiefungen versehen sein, wie sie im Zusammenhang mit Figur 2 beschrieben wurden.

In der Variante der Figur 4 werden verschiedene Abwandlungen der Ausführungsform der Figur 1 oder der Figur 2 dargestellt. Die Erfindung ist jedoch nicht auf die dargestellte Kombination dieser Abwandlungen beschränkt, sondern jede der im Folgenden beschriebenen Abwandlungen kann auch einzeln oder in Kombination mit der in Figur 3 beschriebenen Variante verwirklicht werden. So wird in der Variante der Figur 4 ein flächiger Träger 10 verwendet, der analog der Variante der Figur 2 mit zwei Vertiefungen 24, 25 versehen ist. In der hier dargestellten Variante weisen die Vertiefungen aber ein eckiges Querschnittsprofil auf. Ferner werden in der Variante der Figur 4 statt eines Schweißkopfes 15 zwei hintereinander angeordnete Schweißköpfe 15a, 15b verwendet. Der Schweißkopf 15a führt, analog zum Vorgehen der Figur 1, ein erstes Schneidenmaterial 16a in die obere Vertiefung 24 ein und erzeugt mittels des Lasers 17a eine Schweißverbindung 22. Mit der Schweißvorrichtung 15b kann ein weiteres Schneidenmaterial 16b zur Herstellung eines mehrschichtigen Schneidenbereichs aufgetragen und mit dem ersten Schneidenmaterial verschweißt werden. Falls kein weiteres Schneidenmaterial aufgetragen werden muss, ist es auch möglich, die Lasereinrichtung 17b der zweiten Schweißvorrichtung 15b, oder eine ähnliche Wärmequelle, dazu zu verwenden, die Schweißverbindung 22 wärmezubehandeln, um Spannungen in der Schweißverbindung zu reduzieren.

In den Darstellungen der Figuren 1 bis 4 wird teilchenförmiges Schneidenmaterial von der Oberseite 13 her auf den flächigen Träger 10 aufgebracht. Meist wird jedoch eine Zufuhr des Schneidenmaterials von der Oberseite 13 und der Unterseite 14 der flächigen Träger her, gleichzeitig oder nacheinander, bevorzugt sein. Für eine nacheinander stattfindende Zufuhr kann die Anordnung der flächigen Träger 10 beispielsweise über eine (nicht dargestellte) Umlenkrolle geführt oder verdrillt werden, so dass die in den Figuren 1 bis 4 dargestellte Unterseite 14 anschließend nach oben gerichtet und die Oberseite 13 mit der bereits erzeugten Schweißverbindung 22 nach unten gerichtet ist.

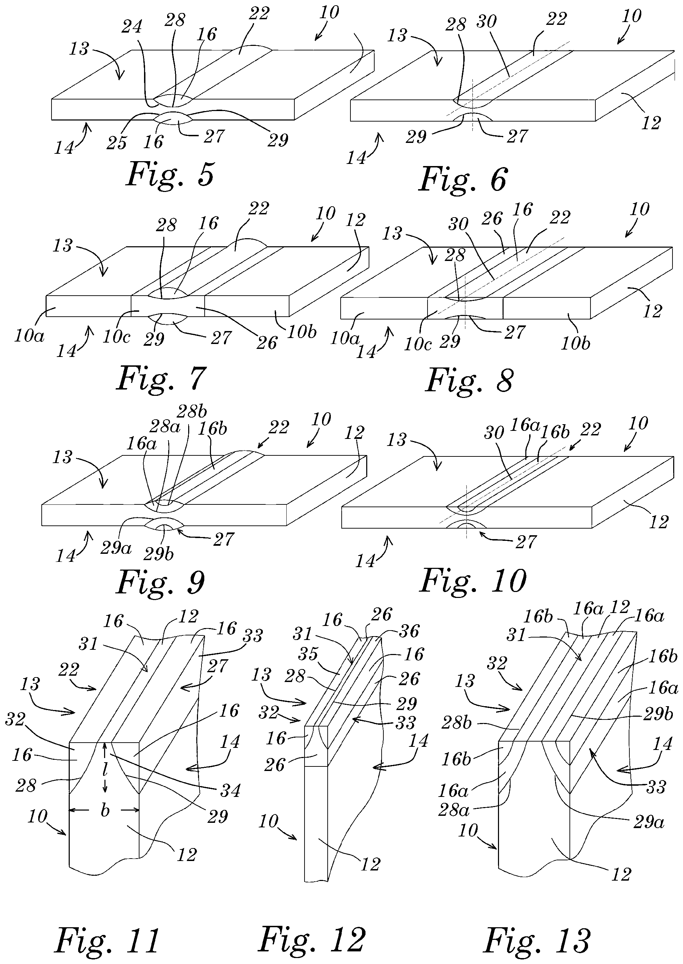

In den Figuren 5 und 6 ist das Ergebnis des Schweißvorgangs der Figur 1 oder der Figur 2 dargestellt, wobei Schneidenmaterial 16 sowohl in die obere Vertiefung 24 also auch in die untere Vertiefung 25 eingebracht wurde, so dass eine obere Schweißverbindung 22 und eine untere Schweißverbindung 27 gebildet wird. Im Bereich des Bodens der Vertiefungen 24, 25 entsteht durch Aufschmelzen der Materialien mit dem Laserstrahl 17 jeweils eine obere Legierungszone 28 bzw. eine untere Legierungszone 29 zwischen dem Trägermaterial und dem zugeführten teilchenförmigen Schneidenmaterial 16. Man erkennt, dass die Schweißverbindungen 22, 27 die im Wesentlichen aus dem zugeführten teilchenförmigen und eingeschmolzenen Schneidenmaterial 16 besteht, in Form einer Schweißüberhöhung über die Oberseite 13 bzw. Unterseite 14 des flächigen Trägers 10 hinausragen. In einem solchen Fall werden die Schweißverbindungen vorzugsweise noch plattgewalzt, so dass man einen ebenen Verbund erhält, wie er in Figur 6 dargestellt ist. Vor oder alternativ zu dem Plattwalzen können die Schweißerhöhungen gegebenenfalls auch noch abgeschliffen werden. Ergänzend oder alternativ zum Plattwalzen können die Schweißverbindungen 22, 27 noch mittels einer Profilwalzung bearbeitet werden. Damit kann ein Vormaterial hergestellt werden, welches mit geringerem Aufwand als den aus dem Stand der Technik bekannten Methoden zu speziellen Zahngeometrien, beispielsweise Trapezzähnen, verarbeitet werden kann.

Anschließend wird der Träger 10 im Wesentlichen entlang der Schweißverbindungen 22, beispielsweise entlang der in Figur 6 dargestellten Trennlinie 30 aufgetrennt. Nach dem Auftrennen und gegebenenfalls weiteren Bearbeitungsschritten liegt das mit dem erfindungsgemäßen Verfahren erhältliche Vormaterial in Form von zwei flächigen Trägern, vorteilhaft Bändern, mit jeweils einem Kantenbereich vor, der im Wesentlichen aus einem Schneidmaterial besteht (vergl. Fig. 11 und zugehörige Beschreibungen weiter unten). Bei dem Vormaterial kann es sich beispielsweise um zwei Bimetallbänder handeln, die anschließend durch Einbringen von Zähnen in den Kantenbereich zu einem Zerspanungswerkzeug weiterverarbeitet werden können. Die Trennlinie 30 ist im dargestellten Beispiel eine gerade Mittellinie durch die Schweißverbindungen 22, 27. Die Trennlinie kann jedoch auch eine kompliziertere Form aufweisen und beispielsweise der gewünschten späteren Form der Zähne angenähert sein. Die Trennung des flächigen Trägers in zwei Hälften wird vorzugsweise schon bei der Herstellung des Vormaterials durchgeführt, so dass zwei Bänder mit jeweils einer Schneidkante entstehen.

In den Figuren 7 und 8 ist in ähnlicher Weise wie in den Figuren 5 und 6 das Ergebnis des Schweißvorgangs der Figur 3 dargestellt. Das teilchenförmige Schneidenmaterial 16 wurde hier auf den zentralen, vorzugsweise aus Schnellarbeitsstahl 26 bestehenden Streifen 10c des Trägers 10 aufgebracht und mit dem Schnellarbeitsstahl verschweißt. Man erkennt, dass obwohl die Oberfläche des Schnellarbeitsstahls 26 eben war, das Laserschweißen dafür sorgt, dass die Schweißverbindung ein Stück in den ebenen Träger eindringen kann. Es wurden wieder eine obere Schweißverbindung 22 und eine untere Schweißverbindung 27 mit Legierungszonen 28, 29 gebildet. In Figur 8 ist der flächige Träger 10 mit den Schweißverbindungen 22, 27 nach dem Plattwalzen dargestellt. Auch hier wird der Träger 10 im Wesentlichen entlang der Schweißverbindungen 22, beispielsweise entlang der in Figur 8 dargestellten Trennlinie 30, aufgetrennt. Eine aufgetrennte Hälfte des Trägers ist in Figur 12 dargestellt.

In den Figur 9 und 10 ist in ähnlicher Weise wie in den Figuren 5 und 6 das Ergebnis des Schweißvorgangs der Figur 4 dargestellt. Hier wurde zunächst ein erstes teilchenförmiges Schneidenmaterial 16a aufgebracht und mit dem Trägermaterial 12 des flächigen Trägers 10 verschweißt, so dass zwischen Trägermaterial 12 und dem ersten Schneidenmaterial 16a eine erste Legierungszone 28a ausgebildet wurde. Auf das eingeschweißte Schneidenmaterial 16a wurde ein zweites teilchenförmiges Schneidenmaterial 16b aufgebracht und mit diesem unter Ausbildung einer Legierungszone 28b verschweißt, so dass eine zweischichtige Schweißverbindung 22 gebildet wird. Entsprechende wurden zwei Schichten teilchenförmiges Schneidenmaterial 16a, 16b auf die Unterseite 14 des flächigen Trägers 10 zur Ausbildung der Schweißverbindung 27 aufgebracht. In Figur 10 ist der flächige Träger 10 mit den Schweißverbindungen 22, 27 nach dem Plattwalzen dargestellt. Auch hier wird der Träger 10 im Wesentlichen entlang der Schweißverbindungen 22, beispielsweise entlang der in Figur 8 dargestellten Trennlinie 30, aufgetrennt. Eine aufgetrennte Hälfte des Trägers ist in Figur 13 dargestellt.

In den Figuren 11, 12 und 13 sind jeweils eine Hälfte der nach dem Schnitt der Figuren 6, 8 und 10 entstandenen Vormaterialien im Querschnitt dargestellt.

Man erkennt in Figur 11, dass nach dem Schnitt entlang der Trennlinie 30 jeweils eine Schnittfläche 31 in den Schweißverbindungen 22, 27 entstanden ist. Bei der Variante der Figur 11 reicht Trägermaterial 12 bis in die Schnittfläche 31 hinein. Seitlich davon befinden sich Schneidenbereiche 32, 33 aus dem ursprünglich teilchenförmigen Schneidenmaterial 16. Falls gewünscht kann dieses Trägermaterial durch Einbringen einer (nicht dargestellten) beispielsweise keilförmigen Nut in die Schnittfläche 31 herausgefräst werden, so dass bei der späteren Weiterverarbeitung durch den Sägenhersteller kein Trägermaterial mehr im Zahnspitzenbereich vorhanden ist. Charakteristisch für das erfindungsgemäße Verfahren bei dem das Schneidenmaterial 16 in Pulverform auf den Träger aufgebracht wird, ist die Tatsache, dass es im Gegensatz zum klassischen Bimetallband aus HSS-Kantdraht im Querschnitt des fertigen Bandes, dort wo das Trägermaterial 12 und das Schneidenmaterial 16 ineinander übergehen, keine im wesentlichen horizontale Schweißnaht/Legierungszone entsteht. Vielmehr umgreifen die Schneidenbereiche 32, 33 aus Schneidenmaterial 16 eine Kernzone 34 aus Trägermaterial 12. Aufgrund der Überlappung von Schneidenbereichen 32, 33 aus Schneidenmaterial 16 und Trägermaterial 12 des flächigen Trägers 10 verlaufen die Legierungszonen 28, 29 entlang der Höhe des fertigen flächigen Vormaterials im Querschnitt typischerweise nicht horizontal wie beim klassischen Bimetallband. Typischerweise überlappen die Schneidenbereiche 32, 33 aus Schneidenmaterial 16 und der flächige Träger 10 aus Trägermaterial 12 im Kantenbereich entlang der Höhe des Querschnitts auf einer Länge I, die in etwa dem 0,2- bis 3-fachen der Breite b des flächigen Trägers 10 im Querschnitt entspricht. Auf diese Weise wird eine besonders stabile Schneidkante bereitgestellt.

Figur 12 zeigt eine der Ansicht der Figur 11 entsprechende Ansicht eines Vormaterials, das man nach Auftrennen des Trägers 10 der Figuren 7 und 8 entlang der Trennlinie 30 erhält. Im Vergleich zur Figur 11 erkennt man deutlich den mehrphasigen Aufbau der Schneidenbereiche 32, 33 des Vormaterials, das sich auch in der Schnittfläche 31 wiederspiegelt. Da bereits der flächige Träger 10 ursprünglich einen Grundkörper mit Streifen 10a, 10b aus Trägermaterial 12 und einen zentralen Streifen 10c aus einem weiteren Schneidenmaterial 26 aufwies, stellt das mit dem erfindungsgemäßen Verfahren aufgebrachte, ursprünglich teilchenförmige Schneidenmaterial 16 bereits die zweite Schicht 35, 36 an Schneidenmaterial dar. Die mit dem erfindungsgemäßen Verfahren erzeugten Legierungszonen 28, 29 verlaufen demnach zwischen dem Schneidenmaterial 26 des flächigen Trägers 10 und dem aufgeschweißten, ursprünglich teilchenförmigen Schneidenmaterial 16. Die zweiten Schichten 35, 36 der Schneidenbereiche 32, 33 des fertigen Vormaterials der Figur 12 bilden bei den später herausgearbeiteten Zähnen des Zerspanungswerkzeugs demnach zusätzlich verstärkte Eckenbereich, wenn als Schneidenmaterial 16 ein noch widerstandsfähigeres Material als das Schneidenmaterial 26 verwendet wird.

Figur 13 zeigt eine der Ansicht der Figur 11 entsprechende Ansicht eines Vormaterials, das man nach Auftrennen des Trägers 10 der Figuren 9 und 10 entlang der Trennlinie 30 erhält. Hier sind die Schneidenbereiche 32, 33 mehrschichtig aufgebaut. An der Trennfläche erkennt man einen zentralen Streifen aus Trägermaterial 12, der durch eine Legierungszone 28a, 29a von dem ersten Schneidenmaterial 16a getrennt ist, welches wiederrum durch eine Legierungszone 28b, 29b von dem zweiten Schneidenmaterial 16b getrennt ist. Auch das Vormaterial der Figur 13 ist insbesondere zur Herstellung von Sägezähnen mit verstärkten Eckbereichen geeignet.

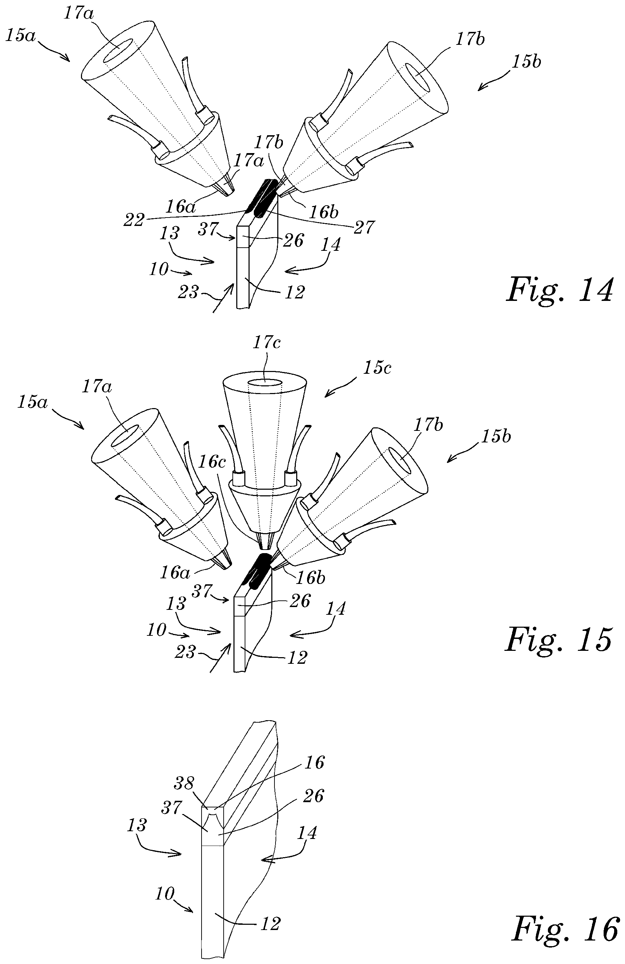

In den Figuren 14 bis 16 wird ein alternatives Verfahren zur Herstellung eines Vormaterials für ein Bimetallbandband mit verstärken Ecken beschrieben. Gemäß Fig. 14 stellt man einen flächigen Träger 10 bereit, der einen Grundkörper aus Trägermaterial 12 und einen Schneidenbereich 37 aus Schneidenmaterial 26 umfasst. Mit zwei Schweißköpfen 15a, 15b wird teilchenförmiges Schneidenmaterial 16a, 16b auf die Ecken des Schneidenbereichs 37 aus Schneidenmaterial 26 des flächigen Trägers 10 aufgebracht und mittels der Laserstrahlen 17a, 17b mit dem flächigen Träger verschweißt. Der Träger 10 besteht in dargestellten Bespielen wieder aus Bandmaterial und wird während des Schweißvorgangs entlang des Pfeils 23 unter den Schweißköpfen hindurchbewegt. Der Schneidenbereich 37 des flächigen Trägers 10 kann mit dem erfindungsgemäßen Verfahren aus einem ersten teilchenförmigen Schneidenmaterial hergestellt sein oder kann aus einem weiteren Schneidenmaterial 26 bestehen, welches beispielsweise als Kantdraht den Grundkörper aufgeschweißt wurde. Gemäß der Variante der Figur 15 wird das teilchenförmige Schneidenmaterial nicht nur auf die Ecken des Schneidenbereichs 37 des flächigen Trägers 10 aufgebracht, sondern mittels eines dritten Schweißkopfes 15c als Teilchenstrahl 16c auch zentral auf die Stirnseite des Schneidenbereich 36 des Trägers 10. Mit dieser Variante wird nicht nur die Herstellung von Ecken mit besonders hoher Verschleiß- und Schneidfestigkeit ermöglicht, sondern der gesamte Bereich der Zahnspitze weist einen verstärken Spitzenbereich 38 mit besonders hoher Verschleiß- und Schneidfestigkeit auf. Die teilchenförmigen Schneidenmaterialien 16a, 16b, 16c können gleich oder unterschiedlich sein. Wenn es sich bei den Schneidenmaterialien 16a, 16b, 16c um dasselbe Schneidenmaterial 16 handelt, entsteht das in Figur 16 dargestellte Vormaterial, mit einem Träger 10, der einen Grundkörper aus Trägermaterial 12 und einen Schneidenbereich 37 aus Schneidenmaterial 26 aufweist. Der Spitzenbereich 38, der mit dem erfindungsgemäßen Verfahren aufgebraucht wurde, besteht aus dem ursprünglich teilchenförmigen Schneidenmaterial 16.

## Patentansprüche

1. Verfahren zur Herstellung eines Vormaterials für ein Zerspanungswerkzeug, insbesondere eines Vormaterials für ein Sägeblatt, ein Sägeband, eine Schneidlinie, ein Stanzmesser oder eine Klinge, wobei
man wenigstens ein erstes teilchenförmiges Schneidenmaterial (16,16a) auf einen flächigen Träger (10) aufbringt,
man das erste teilchenförmige Schneidenmaterial (16) mit dem flächigen Träger (10) verschweißt; und
man den flächigen Träger (10) im Wesentlichen entlang der so erzeugten Schweißverbindung (22,27) trennt.

2. Verfahren gemäß Anspruch 1, wobei man das wenigstens eine erste teilchenförmige Schneidenmaterial (16,16a) in eine auf der Oberseite (13) und/oder der Unterseite (14) des flächigen Trägers (10) ausgesparte Vertiefung (24,25) einbringt.

3. Verfahren gemäß Anspruch 2, wobei der flächige Träger (10) ein Band aus Metall oder Metalllegierung ist.

4. Verfahren gemäß einem der Ansprüche 1 bis 3, wobei man das erste teilchenförmigen Schneidenmaterial (16,16a) mit dem flächigen Träger (10) verschweißt, indem man den flächigen Träger (10) und/oder das erste teilchenförmigen Schneidenmaterial (16,16a) zumindest teilweise aufschmilzt und den aufgeschmolzenen Materialverbund wenigsten teilweise erstarren lässt.

5. Verfahren gemäß einem der Ansprüche 1 bis 4, wobei der flächige Träger (10) einen Grundkörper aus einem Trägermaterial (12) umfasst.

6. Verfahren gemäß Anspruch 5, wobei der flächige Träger (10) in dem Grundmaterial wenigstens einen Bereich aufweist, der aus einem weiteren Schneidenmaterial (26) besteht und man das erste teilchenförmige Schneidenmaterial (16,16a) auf diesen Bereich aufbringt.

7. Verfahren gemäß einem der Ansprüche 1 bis 6, wobei man vor dem Trennen des Verbunds aus Träger (10) und erstem Schneidenmaterial (16,16a) zumindest ein zweites teilchenförmiges Schneidenmaterial (16b) zuführt und aufschmilzt.

8. Verfahren gemäß einem der Ansprüche 1 bis 7, wobei man das teilchenförmige Schneidenmaterial in Form eines Pulvers, eines Granulats, einer Paste oder eines Fülldrahtes zuführt.

9. Verfahren gemäß einem des Ansprüche 1 bis 8, wobei das Schneidenmaterial Metalle und/oder Metalllegierungen enthält.

10. Verfahren gemäß einem des Ansprüche 1 bis 9, wobei das Schneidenmaterial metallische Hartstoffe enthalten.

11. Verfahren gemäß einem der Ansprüche 1 bis 10, wobei man den flächigen Träger (10) und das teilchenförmige Schneidenmaterial (16,16a,16b) durch Energiezufuhr mittels mindestens einer Schweißvorrichtung miteinander verschweißt.

12. Verfahren gemäß einem der Ansprüche 1 bis 11, wobei man das teilchenförmige Schneidenmaterial (16,16a,16b) beiden Seiten (13,14) des flächigen Trägers (10) zuführt.

13. Verfahren zur Herstellung eines Vormaterials für ein Zerspanungswerkzeug, insbesondere eines Vormaterials für ein Sägeblatt, ein Sägeband, eine Schneidlinie, ein Stanzmesser oder eine Klinge, wobei
man einen flächigen Träger (10) bereitstellt, der einen Grundkörper aus Trägermaterial (12) und einen Schneidenbereich aus Schneidenmaterial (26) umfasst;
man wenigstens ein teilchenförmiges Schneidenmaterial (16) auf wenigstens eine Kante des Schneidenbereichs des flächigen Trägers (10) aufbringt, und
man das teilchenförmige Schneidenmaterial (16) mit dem flächigen Träger (10) verschweißt.

## Claims

1. A method for producing a preliminary material for a machining tool, in particular a preliminary material for a saw blade, a saw band, a cutting line, a punching knife or a blade, wherein
at least a first particulate cutting-edge material (16, 16a) is applied to a sheet-like base (10),
the first particulate cutting-edge material (16) is welded to the sheet-like base (10), and
the sheet-like base (10) is separated substantially along the welded connection (22, 27) thus produced.

2. The method as claimed in claim 1, wherein the at least one, first particulate cutting-edge material (16, 16a) is introduced into a depression (24, 25) cut out on the upper side (13) and/or the underside (14) of the sheet-like base (10).

3. The method as claimed in claim 2, wherein the sheet-like base (10) is a band of metal or metal alloy.

4. The method as claimed in one of claims 1 to 3, wherein the first particulate cutting-edge material (16, 16a) is welded to the sheet-like base (10) in that the sheet-like base (10) and/or the first particulate cutting-edge material (16, 16a) is/are at least partially melted and the molten material composite is left to solidify at least partially.

5. The method as claimed in one of claims 1 to 4, wherein the sheet-like base (10) comprises a main body of a base material (12).

6. The method as claimed in claim 5, wherein the sheet-like base (10) has in the matrix material at least one region that consists of a further cutting-edge material (26), and the first particulate cutting-edge material (16, 16a) is applied to this region.

7. The method as claimed in one of claims 1 to 6, wherein, before separating the composite comprising the base (10) and the first cutting-edge material (16,16a), at least a second particulate cutting-edge material (16b) is supplied and melted.

8. The method as claimed in one of claims 1 to 7, wherein the particulate cutting-edge material is supplied in the form of a powder, granules, a paste or a filling wire.

9. The method as claimed in one of claims 1 to 8, wherein the cutting-edge material contains metals and/or metal alloys.

10. The method as claimed in one of claims 1 to 9, wherein the cutting-edge material contains metallic hard materials.

11. The method as claimed in one of claims 1 to 10, wherein the sheet-like base (10) and the particulate cutting-edge material (16, 16a, 16b) are welded to one another by supplying energy by means of at least one welding device.

12. The method as claimed in one of claims 1 to 11, wherein the particulate cutting-edge material (16, 16a, 16b) is supplied to both sides (13, 14) of the sheet-like base (10).

13. A method for producing a preliminary material for a machining tool, in particular a preliminary material for a saw blade, a saw band, a cutting line, a punching knife or a blade, wherein
a sheet-like base (10), which comprises a main body of base material (12) and a cutting-edge region of cutting-edge material (26), is provided,
at least one particulate cutting-edge material (16) is applied to at least one edge of the cutting-edge region of the sheet-like base (10), and
the particulate cutting-edge material (16) is welded to the sheet-like base (10).

## Revendications

1. Procédé de fabrication d'une matière brute pour un outil d'enlèvement de copeaux, notamment d'une matière brute pour une lame de scie, une bande de scie, une ligne de coupe, un emporte-pièce ou une lame, où
l'on dépose au moins une première matière en particules pour arête coupante (16, 16a) sur un support surfacique (10),
l'on soude la première matière en particules pour arête coupante (16) sur le support surfacique (10) et
l'on découpe le support surfacique (10) essentiellement le long du joint de soudure (22, 27) ainsi réalisé.

2. Procédé selon la revendication 1, où l'on introduit ladite au moins une première matière en particules pour arête coupante (16, 16a) dans un enfoncement (24, 25) évidé sur la face supérieure (13) et/ou la face inférieure (14) du support surfacique (10).

3. Procédé selon la revendication 2, où le support surfacique (10) est une bande en métal ou en un alliage métallique.

4. Procédé selon l'une des revendications 1 à 3, où l'on soude la première matière en particules pour arête coupante (16, 16a) sur le support surfacique (10) en mettant le support surfacique (10) et/ou la première matière en particules pour arête coupante (16, 16a) au moins partiellement en fusion et l'on laisse se solidifier au moins partiellement le matériau composite mis en fusion.

5. Procédé selon l'une des revendications 1 à 4, où le support surfacique (10) comprend un corps de base en un matériau de support (12).

6. Procédé selon la revendication 5, où le support surfacique (10) comprend dans la matière de base au moins une zone qui est constituée en une autre matière pour arête coupante (26) et l'on dépose la première matière en particules pour arête coupante (16, 16a) sur cette zone.

7. Procédé selon l'une des revendications 1 à 6, où, avant de séparer la composition constituée du support (10) et de la première matière pour arête coupante (16, 16a), l'on apporte et met en fusion au moins une deuxième matière en particules pour arête coupante (16, 16a).

8. Procédé selon l'une des revendications 1 à 7, où l'on apporte la matière en particules pour arête coupante (16, 16a) sous la forme d'une poudre, de granules, d'une pâte ou d'un fil fourré.

9. Procédé selon l'une des revendications 1 à 8, où la matière pour arête coupante comprend des métaux et/ou des alliages de métaux.

10. Procédé selon l'une des revendications 1 à 9, où la matière pour arête coupante comprend des matières dures métalliques.

11. Procédé selon l'une des revendications 1 à 10, où l'on soude le support surfacique (10) et la matière en particules pour arête coupante (16, 16a, 16b) l'un avec l'autre par apport d'énergie au moyen d'au moins un dispositif de soudage.

12. Procédé selon l'une des revendications 1 à 11, où l'on apporte la matière en particules pour arête coupante (16, 16a, 16b) aux deux côtés (13, 14) du support surfacique (10).

13. Procédé de fabrication d'une matière brute pour un outil d'enlèvement de copeaux, notamment d'une matière brute pour une lame de scie, une bande de scie, une ligne de coupe, un emporte-pièce ou une lame, où
l'on met à disposition un support surfacique (10) qui comprend un corps de base en un matériau de support (12) et une zone d'arête coupante en un matériau pour arête coupante (26) ;
l'on dépose au moins une matière en particules pour arête coupante (16) sur au moins un bord de la zone d'arête coupante du support surfacique (10), et
l'on soude la matière en particules pour arête coupante (16) sur le support surfacique (10).
